(19) **Europäisches Patentamt / European Patent Office / Office européen des brevets**

(11) **EP 4 552 755 A1**

(12) **EUROPEAN PATENT APPLICATION**
published in accordance with Art. 153(4) EPC

(43) Date of publication:
**14.05.2025 Bulletin 2025/20**

(21) Application number: **22950346.1**

(22) Date of filing: **08.07.2022**

(51) International Patent Classification (IPC):
*B07C 5/36* (2006.01)   *B07C 5/342* (2006.01)
*G06V 10/764* (2022.01)   *G06T 7/11* (2017.01)
*G06N 3/04* (2023.01)   *G06N 3/08* (2023.01)
*G06N 20/20* (2019.01)   *G06N 20/10* (2019.01)
*G06V 10/82* (2022.01)

(52) Cooperative Patent Classification (CPC):
**B07C 5/342; B07C 5/36; G06N 3/04; G06N 3/08; G06N 20/10; G06N 20/20; G06T 7/11; G06V 10/764; G06V 10/82**

(86) International application number:
**PCT/KR2022/009935**

(87) International publication number:
**WO 2024/010120 (11.01.2024 Gazette 2024/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2022 KR 20220082924**

(71) Applicant: **Aetech Corporation**
**Incheon 22689 (KR)**

(72) Inventor: **PARK, Taehyung**
**Incheon 22689 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **WASTE CLASSIFICATION SYSTEM BASED ON VISION-HYPERSPECTRAL FUSION DATA**

(57) The present invention relates to a waste classification system based on vision-hyperspectral fusion data, including: a first learning data generation unit generating first learning data for a target object via a first artificial intelligence model trained using a hyperspectral image of waste acquired via a hyperspectral sensor; a second learning data generation unit generating second learning data for the target object via a second artificial intelligence model trained using a vision image of waste acquired via a vision camera; and a waste classification unit that performs waste classification for the target object by applying the first learning data and the second learning data to a third artificial intelligence model.

FIG. 1

EP 4 552 755 A1

## Description

## Technical Field

The present invention relates to a waste classification system, and more specifically, to a vision-hyperspectral fusion data-based waste classification system that classifies waste through an artificial intelligence model based on vision data and hyperspectral data.

## Background Art

A large amount of waste is produced every day from homes, factories, restaurants, etc., and among general waste, recyclable waste, and food waste, many people separate and throw away food waste.

However, recyclable waste is still being discharged mixed with general waste, and manpower is being directly input to separating it.

In addition, companies that use PET or glass bottles are importing recyclable waste from overseas because recyclable waste may not be properly separated and may be disposed of as general waste.

In Korea, various inventions are being made to address these issues, and in particular, the methods, devices, and systems for separating PET bottles are being filed as patent applications and registered as patents.

For example, Korean Patent No. 10-1270354 entitled "System for Classifying Recyclable Waste" has the advantage of being able to automatically classify waste according to material by imaging the waste.

However, there is an issue that it is difficult to accurately discriminate the material of various pieces of waste using images from vision cameras.

In addition, there have been recent attempts to classify waste using hyperspectral imaging technology and artificial intelligence technology, but the misrecognition rate is very high.

## Technical Problem

A technical task of the present invention is to provide a vision-hyperspectral fusion data-based waste classification system capable of clearly discriminating waste classification using a hyperspectral image of waste and an artificial intelligence model.

## Technical Solution

In order to solve these problems, a vision-hyperspectral fusion data-based waste classification system according to an embodiment of the present invention includes: a first learning data generation unit generating first learning data for a target object via a first artificial intelligence model trained using a hyperspectral image of waste acquired via a hyperspectral sensor; a second learning data generation unit generating second learning data for the target object via a second artificial intelligence model trained using a vision image of waste acquired via a vision camera; and a waste classification unit that performs waste classification for the target object by applying the first learning data and the second learning data to a third artificial intelligence model.

The system further includes a target object specifying unit that specifies the target object using the hyperspectral image and the vision image, wherein the target object specifying unit may specify the target object by considering locations of the vision camera and the hyperspectral sensor and a moving speed of the waste on a conveyor.

The target object specifying unit may determine an analysis region of the target object by excluding a portion in which the target object overlaps with other waste.

The first learning data generation unit may include a semi-supervised learning processing model unit that processes the hyperspectral data through a semi-supervised learning processing model to generate integrated data; and a target object material prediction unit discriminating a material of the target object using the integrated data through a deep learning model.

The hyperspectral data includes labeled data and unlabeled data, and the semi-supervised learning processing model may process the labeled data and the unlabeled data through a principal component analysis network.

The hyperspectral data includes spatial information and spectral information, and the semi-supervised learning processing model unit may generate the integrated data by integrating respective results obtained after training each of the spatial information and the spectral information through the semi-supervised learning processing model.

The deep learning model may use one or more of a convolutional neural network (CNN) and a recurrent neural network (RNN).

The second artificial intelligence model uses one or more of the CNN and the RNN, and the second learning data may discriminate a shape and color of the waste for the target object.

The third artificial intelligence model may be one or more of multiple linear regression (MLR) analysis, support vector machine (SVM), or K-nearest neighbor (k-NN) classification.

In addition to the technical tasks of the present invention mentioned above, other features and advantages of the present invention will be described below, or will be clearly understood by those skilled in the art from such description and explanation.

## Advantageous Effects

According to the present invention as described above, the following effects are achieved.

The present invention can improve classification accuracy according to the type of waste by applying first learning data regarding the material of waste generated through hyperspectral images and a semi-supervised learning processing model, and second learning data regarding the shape and color of waste generated through vision images and a deep learning model to a waste classification model.

In addition, the present invention redesigns the semi-supervised learning processing model using both labeled data and unlabeled data as training data for a principal component analysis model, and utilizes both the unlabeled data as well as data on labeled pixel information of the hyperspectral image as input data for the semi-supervised learning processing model, thereby addressing the issue of overfitting due to insufficient training data.

In addition, the present invention can remove noise from hyperspectral data by determining an analysis region of a target object by excluding a portion overlapping with other waste using a hyperspectral image and RGB image overlap technique for the same target object.

In addition, other features and advantages of the present invention may be newly recognized through embodiments of the present invention.

## BRIEF DESCRIPTION OF THE DRAWINGS

FIG. 1 a block diagram illustrating a vision-hyperspectral fusion data-based waste classification system according to an embodiment of the present invention.

FIG. 2 is an exemplary diagram illustrating a target object specifying unit specifying a target object according to an embodiment of the present invention.

FIG. 3 is an exemplary diagram illustrating a target object specifying unit determining an analysis region of a target object according to an embodiment of the present invention.

FIG. 4 is a graph illustrating the normalized near-infrared reflectance spectrum by type of plastic.

FIG. 5 is a diagram illustrating a first learning data generation unit according to an embodiment of the present invention.

FIG. 6 is a diagram illustrating a semi-supervised learning processing model according to an embodiment of the present invention.

FIG. 7 is a diagram illustrating a semi-supervised learning processing model unit generating integrated data according to an embodiment of the present invention.

## DETAILED DESCRIPTION

In the present specification, in adding reference numerals for elements in each drawing, it should be noted that like reference numerals already used to denote like elements in other drawings are used for elements wherever possible.

The terms described in the present specification should be understood as follows.

The singular forms are intended to include the plural forms as well, unless the context clearly indicates otherwise, and the scope of right should not be limited by these terms.

It should be understood that the terms "comprise" or "have" do not preclude the presence or addition of one or more other features, integers, steps, operations, components, elements, or combinations thereof.

As used herein, the term "waste" includes plastics, PET bottles, glass bottles, glass, paper, Styrofoam, general waste, and industrial waste.

Hereinafter, preferred embodiments of the present invention designed to solve the tasks will be described in detail with reference to the accompanying drawings.

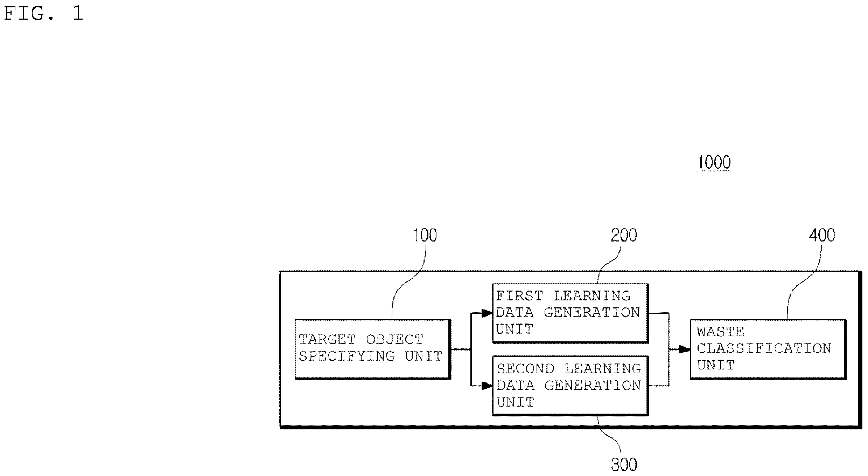

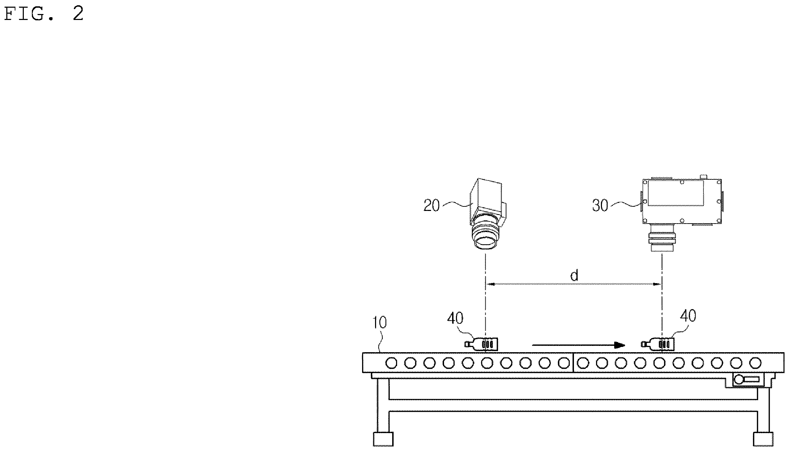

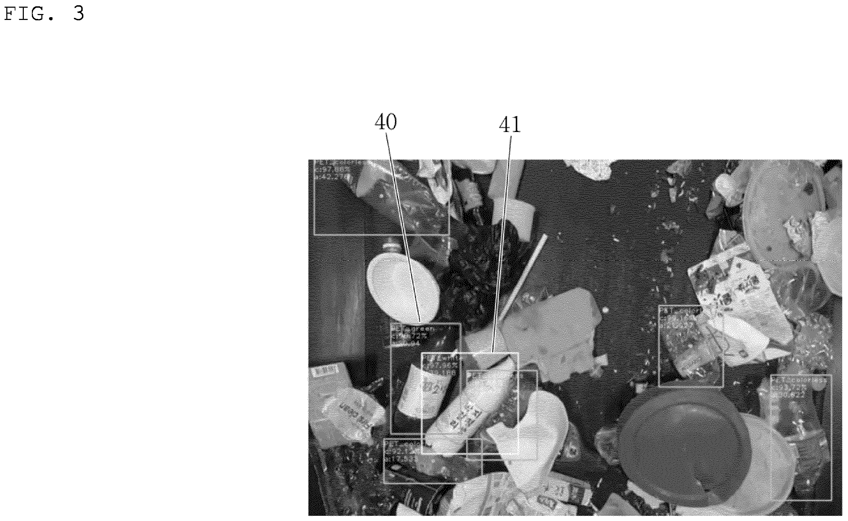

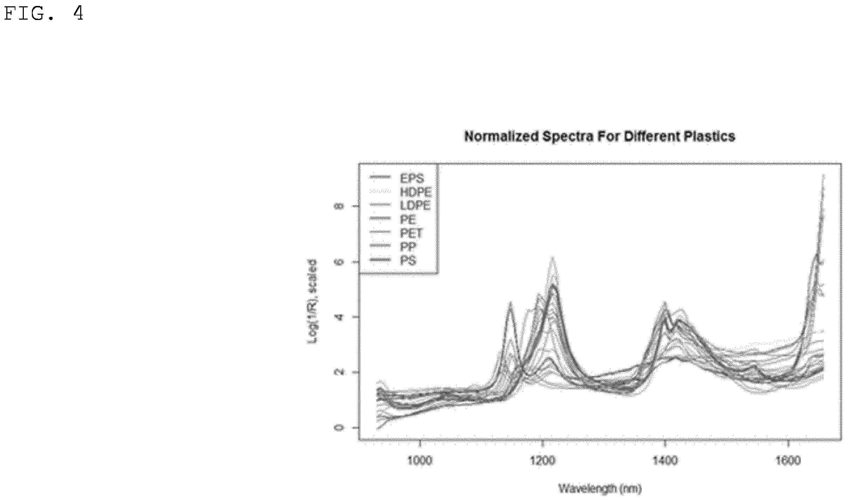

FIG. 1 is a block diagram illustrating a vision-hyperspectral fusion data-based waste classification system according to an embodiment of the present invention. FIG. 2 is an exemplary diagram illustrating a target object specifying unit specifying a target object according to an embodiment of the present invention. FIG. 3 is an exemplary diagram illustrating a target object specifying unit determining an analysis region of a target object according to an embodiment of the present invention. FIG. 4 is a graph illustrating the normalized near-infrared reflectance spectrum by type of plastic.

Referring to FIG. 1, a vision-hyperspectral fusion data-based waste classification system 1000 according to an embodiment of the present invention includes: a target object specifying unit 100 that specifies a target object using a hyperspectral image and a vision image of waste; a first learning data generation unit 200 generating first learning data for the target object via a first artificial intelligence model trained using the hyperspectral image; a second learning data generation unit 300 generating second learning data for the target object via a second artificial intelligence model trained using the vision image; and a waste classification unit 400 that performs waste classification for the target object by applying the first learning data and the second learning data to a third artificial intelligence model.

The target object specifying unit 100 may specify the target object from the hyperspectral image of waste acquired through a hyperspectral sensor and the vision image of waste acquired through a vision camera, and determine the analysis region of the target object.

Referring to FIG. 2, the target object specifying unit 100 according to an embodiment of the present invention may specify a target object 40 by considering the locations of a vision camera 20 and a hyperspectral sensor 30 and the moving speed of waste 40 on a transfer conveyor 10.

By considering a moving distance (d) of the waste using the locations of the vision camera 20 and the hyperspectral sensor 30 and the moving speed of the transfer conveyor 10, a hyperspectral image may be acquired through the hyperspectral sensor 30 for the same waste captured by the vision camera 20.

Thereafter, referring to FIG. 3, the target object specifying unit 100 according to another embodiment of the present invention may use the vision image of waste acquired through the vision camera 20 to determine the analysis region of the target object, excluding the portion in which the target object 40 overlaps with other waste 40.

When the region where waste overlaps is specified as the analysis region, it is difficult to clearly discriminate the material of the target object. However, an embodiment of the present invention uses a hyperspectral image and RGB image overlap technology for the same target object to determine the analysis region of the target object by excluding the portion that overlaps with other waste, thereby removing noise from hyperspectral data.

The first learning data generation unit 200 may generate first learning data for discriminating the material of the target object using a semi-supervised learning processing model and a deep learning model based on the hyperspectral data for the target object.

The hyperspectral data contains spatial and spectral information of the hyperspectral image. The hyperspectral image has 10 to 100 spectral bands, and the hyperspectral sensor is classified into UV (200-400 nm), VIS (400-600 nm), NIR (700-1,100 nm), SWIR (1.1-2.5 $\mu$m), and MWIR (2.5-7 $\mu$m) according to the spectral range.

Referring to FIG. 4, the vision-hyperspectral fusion data-based waste classification system 1000 according to an embodiment of the present invention may clearly discriminate the materials of various types of plastics using the near-infrared band (700 to 1,100 nm).

The material of waste may be discriminated more clearly when using hyperspectral images rather than RGB images with two spectral bands acquired through the vision camera.

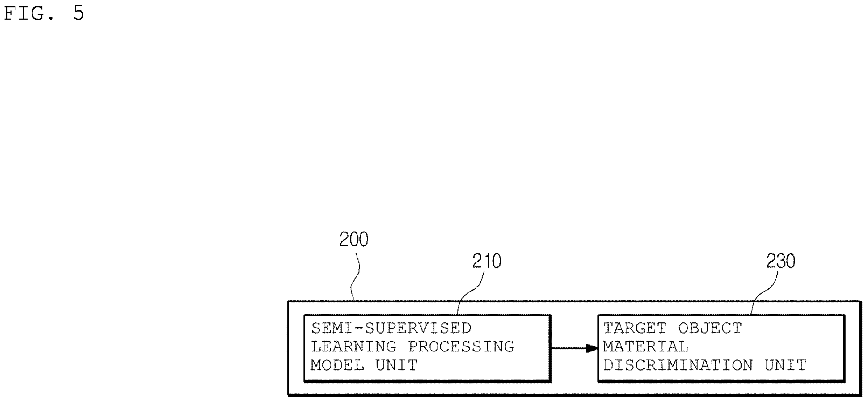

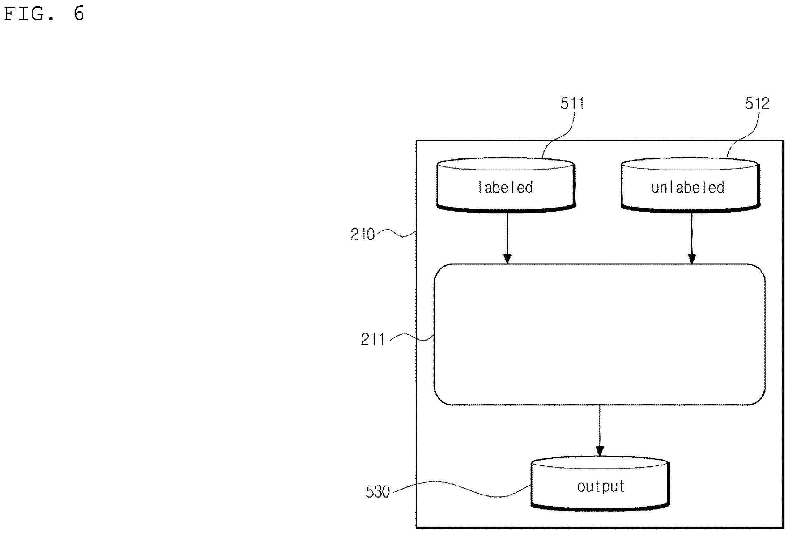

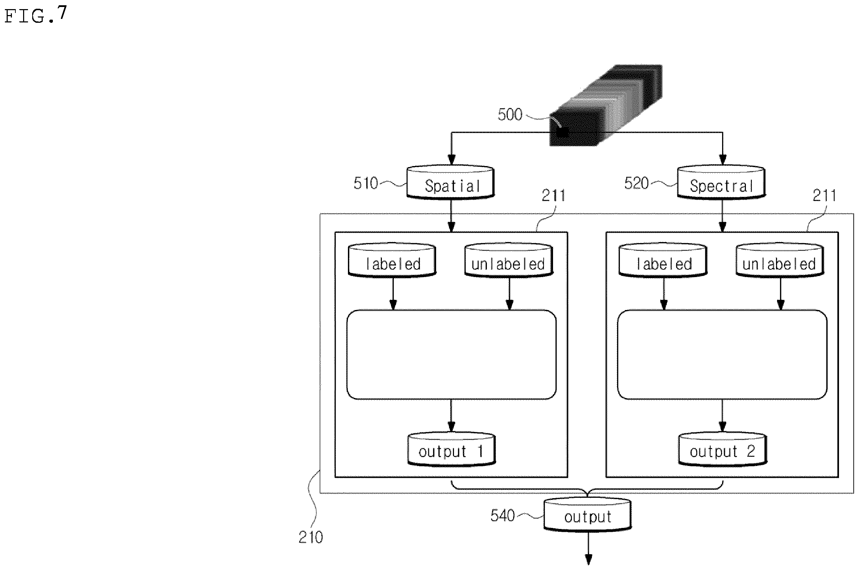

FIG. 5 is a diagram illustrating a first learning data generation unit according to an embodiment of the present invention. FIG. 6 is a diagram illustrating a semi-supervised learning processing model according to an embodiment of the present invention. FIG. 7 is a diagram illustrating a semi-supervised learning processing model unit generating integrated data according to an embodiment of the present invention.

Referring to FIGS. 5 and 6, the first learning data generation unit 200 according to an embodiment of the present invention includes a semi-supervised learning processing model unit 210 and a target object material discrimination unit 230.

The semi-supervised learning processing model unit 210 may process hyperspectral data 511, 512 through a semi-supervised learning processing model 211 to generate integrated data 530.

When an attempt is made to classify waste using hyperspectral images using an artificial intelligence model according to the related art, there was an issue of overfitting due to insufficient training data.

The vision-hyperspectral fusion data-based waste classification system 1000 according to an embodiment of the present invention may discriminate the material of a target object without overfitting even when insufficient hyperspectral data is used as training data using the semi-supervised learning processing model 211.

The hyperspectral image contains both labeled and unlabeled pixel information.

The semi-supervised learning processing model 211 according to an embodiment of the present invention may use labeled data and unlabeled data in a principal component analysis (PCA) network as training data.

In other words, while the principal component analysis model according to the related art is an unsupervised learning model, in an embodiment of the present invention, using both labeled data and unlabeled data as training data of the principal component analysis model, it may be redesigned as a semi-supervised learning processing model.

Accordingly, the issue of overfitting due to insufficient training data may be addressed by utilizing both unlabeled data as well as data on labeled pixel information of the hyperspectral image as input data.

Although not illustrated, the semi-supervised learning processing model 211 according to an embodiment of the present invention may be configured of an input layer, a convolution layer, and an output layer.

In the principal component analysis model according to the related art, the training data of the input layer is assumed as follows.

$X = \{X_1, X_2, X_3, ..., X_n\}$, and $X_i$ is the ith sample with the size of $\in R^{m \times n}$. For example, when the sample is a spatial information vector, m = 1 and n is the number of bands.

Principal component analysis is a method of summarizing correlated multidimensional data into low-dimensional data. For example, multidimensional data may be converted into two-dimensional data. When multidimensional data is mapped to a single axis, the axis with the greatest variance is decided as the first coordinate axis, and the axis with the second greatest variance is decided as the second coordinate axis. The multidimensional data is mapped onto a plane formed by the first and second coordinate axes.

On the other hand, in the semi-supervised learning processing model 211 according to an embodiment of the present invention, the training data of the input layer may be transformed as follows.

When $Y = [Y^l, Y^u]$, where $Y^l$ is labeled data, and $Y^u$ is unlabeled data, $Y = [Y_1, Y_2, Y_3, ..., Y_{(N_l+N_u)mn}] \in R^{k_1 k_2 \times (N_l+N_u)mn}$.

Herein, $N_l$ is the number of labeled pixels and $N_u$

is the number of unlabeled pixels.

Referring to FIG. 7, the first learning data generation unit 200 according to another embodiment of the present invention may generate integrated data 440 by integrating results obtained after training hyperspectral data including spatial information 510 and spectral information 520 through the semi-supervised learning processing model 211.

Hyperspectral data containing spatial and spectral information are very large, measuring tens to hundreds of megabytes, and the Hyperspectral data analysis is difficult due to many factors such as mixed pixels in the data, high data redundancy due to high correlation in adjacent bands, variability of hyperspectral signatures, and the curse of the dimensionality, in addition to physical factors such as atmospheric and geometric distortions.

The first learning data generation unit 200 according to another embodiment of the present invention separates the spatial information and the spectral information and then trains each thereof through the semi-supervised learning processing model 211, thereby enabling the material of the waste to be accurately discriminated without overfitting using only the training data, even with insufficient hyperspectral data.

The target object material discrimination unit 230 may generate first learning data that discriminate the material of the target object using the integrated data generated from the first learning data generation unit 200 through a deep learning model.

In this connection, the deep learning model may use one or more of a convolutional neural network (CNN) and a recurrent neural network (RNN).

The target object material discrimination unit 230 according to an embodiment of the present invention may input integrated data into the CNN and the RNN configured in parallel, and calculate each probability value derived as an average value.

The convolutional neural network (CNN) is a network that extracts feature values by performing a convolution operation that applies multiple kernels of various window sizes to the pixel vector sequence that passes through an embedding layer.

Unlike the convolutional neural network, the recurrent neural network (RNN) sequentially input the pixel vector sequences generated through the embedding layer into the network for each pixel to extract features. Since the RNN infers newly entered pixels together with the state vector inferred from the previous input sequence, thus extracting feature maps that reflect the features of multiple pixels.

The target object material discrimination unit 230 according to another embodiment of the present invention may input the integrated data into the CNN and the RNN configured in parallel, and instead of merely combining and averaging the derived probability values, may also discriminate the material of the waste by training the same to a new connected network.

The second learning data generation unit 300 may generate second learning data for the target object through the second artificial intelligence model trained using the vision image of waste acquired through the vision camera.

The second artificial intelligence model may use one or more of the CNN or the RNN. Since it overlaps with the explanation of the deep learning model mentioned above, its explanation will be omitted.

In this connection, the second learning data is data discriminating the shape and color of waste for the target object.

The waste classification unit 400 may classify waste of a target object by applying the first learning data on the material of the target object and the second learning data on the shape and color of the target object to the third artificial intelligence model.

The third artificial intelligence model may be one or more of multiple linear regression (MLR) analysis, support vector machine (SVM), or K-nearest neighbor (k-NN) classification.

The multiple linear regression analysis may predict the type of waste by calculating the correlation coefficient by applying input attributes (material, shape, color) to a multiple linear regression analysis model generated through learning data.

The support vector machine is a method that applies input attributes to a kernel function of the SVM generated through learning data to create a hyperplane that may classify data in a three-dimensional space, and then predicts the type of proximity by calculating the margin of the characteristics of data (support vectors) close to the hyperplane. The types of kernel functions include linear kernels, polynomial kernels, Gaussian kernels, inverse tangent kernels, and sigmoid kernels.

The K-nearest neighbor classification may predict the type by calculating the proximity measure by applying input attributes to the trained k-NN classification model, calculating the distance similarity between data, and then determining the majority of the k-NN among nearest ks.

The vision image-based waste classification system according to the related art had the issue that the material of the waste might not be clearly discriminated due to the small number of bands in the RGB image.

In contrast, the vision-hyperspectral fusion data-based waste classification system according to an embodiment of the present invention can improve classification accuracy according to the type of waste by applying first learning data regarding the material of waste generated through hyperspectral images and a semi-supervised learning processing model, and second learning data regarding the shape and color of waste generated through vision images and a deep learning model to a waste classification model.

In addition, the vision-hyperspectral fusion data-based waste classification system according to an embodiment of the present invention redesigns the semi-supervised learning processing model using both labeled data and unlabeled data as training data for a principal component analysis model, and utilizes both the unlabeled data as well as data on labeled pixel information of the hyperspectral image as input data for the semi-supervised learning processing model, thereby addressing the issue of overfitting due to insufficient training data.

In addition, the vision-hyperspectral fusion data-based waste classification system according to an embodiment of the present invention can remove noise from hyperspectral data by determining an analysis region of a target object by excluding a portion overlapping with other waste using a hyperspectral image and RGB image overlap technique for the same target object.

While the above-described present invention has been described with reference to the exemplary embodiments and the accompanying drawings, it will be apparent to those skilled in the technical field to which the present invention pertains that various substitutions, modifications, and changes may be made without departing from the technical spirit and scope of the present invention.

**Description of Reference Numerals**

    100: Target object specifying unit
    200: First learning data generation unit
    210: Semi-supervised learning processing model unit
    230: Target object material discrimination unit
    300: Second learning data generation unit
    400: Waste classification unit
    1000: Vision-hyperspectral fusion data-based waste classification system

**Claims**

1. A vision-hyperspectral fusion data-based waste classification system, comprising:

    a first learning data generation unit generating first learning data for a target object via a first artificial intelligence model trained using a hyperspectral image of waste acquired via a hyperspectral sensor;
    a second learning data generation unit generating second learning data for the target object via a second artificial intelligence model trained using a vision image of waste acquired via a vision camera; and
    a waste classification unit that performs waste classification for the target object by applying the first learning data and the second learning data to a third artificial intelligence model.

2. The system of claim 1, further comprising a target object specifying unit that specifies the target object using the hyperspectral image and the vision image, wherein the target object specifying unit specifies the target object by considering locations of the vision camera and the hyperspectral sensor and a moving speed of the waste on a conveyor.

3. The system of claim 2, wherein the target object specifying unit determines an analysis region of the target object by excluding a portion in which the target object overlaps with other waste.

4. The system of claim 1, wherein the first learning data generation unit comprises:

    a semi-supervised learning processing model unit that processes the hyperspectral data through a semi-supervised learning processing model to generate integrated data; and
    a target object material prediction unit discriminating a material of the target object using the integrated data through a deep learning model.

5. The system of claim 4, wherein the hyperspectral data comprises labeled data and unlabeled data, and the semi-supervised learning processing model processes the labeled data and the unlabeled data through a principal component analysis network.

6. The system of claim 5,

    wherein the hyperspectral data comprises spatial information and spectral information; and
    wherein the semi-supervised learning processing model unit generates the integrated data by integrating respective results obtained after training each of the spatial information and the spectral information through the semi-supervised learning processing model.

7. The system of claim 4, wherein the deep learning model uses one or more of a convolutional neural network (CNN) and a recurrent neural network (RNN).

8. The system of claim 1,

    wherein the second artificial intelligence model uses one or more of the CNN and the RNN; and
    wherein the second learning data discriminates a shape and color of the waste for the target object.

9. The system of claim 1, wherein the third artificial intelligence model is one or more of multiple linear

**EP 4 552 755 A1**

regression (MLR) analysis, support vector machine (SVM), or K-nearest neighbor (k-NN) classification.

FIG. 1

FIG. 2

FIG. 3

EP 4 552 755 A1

Normalized Spectra For Different Plastics

FIG. 4

FIG. 5

200

210

230

```
┌─────────────────────────────────────────────────────────────┐
│  ┌──────────────────────┐        ┌──────────────────────┐    │
│  │ SEMI-SUPERVISED      │        │ TARGET OBJECT        │    │
│  │ LEARNING PROCESSING  │──────▶ │ MATERIAL             │    │
│  │ MODEL UNIT           │        │ DISCRIMINATION UNIT  │    │
│  └──────────────────────┘        └──────────────────────┘    │
└─────────────────────────────────────────────────────────────┘
```

EP 4 552 755 A1

FIG. 6

FIG.7

EP 4 552 755 A1

## INTERNATIONAL SEARCH REPORT

| International application No. |
|---|
| **PCT/KR2022/009935** |

**A. CLASSIFICATION OF SUBJECT MATTER**

**B07C 5/36**(2006.01)i; **B07C 5/342**(2006.01)i; **G06V 10/764**(2022.01)i; **G06T 7/11**(2017.01)i; **G06N 3/04**(2006.01)i; **G06N 3/08**(2006.01)i; **G06N 20/20**(2019.01)i; **G06N 20/10**(2019.01)i; **G06V 10/82**(2022.01)i

According to International Patent Classification (IPC) or to both national classification and IPC

**B. FIELDS SEARCHED**

Minimum documentation searched (classification system followed by classification symbols)

B07C 5/36(2006.01); B02C 23/00(2006.01); B07C 5/10(2006.01); B07C 5/342(2006.01); G06N 3/02(2006.01); G06N 99/00(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐기물(waste), 분류 시스템(classification system), 비전-초분광 융합데이터 (vision-hyperspectral fusion data), 딥러닝 모델(deep learning model), 센서(sensor)

**C. DOCUMENTS CONSIDERED TO BE RELEVANT**

| Category* | Citation of document, with indication, where appropriate, of the relevant passages | Relevant to claim No. |
|---|---|---|
| X | 송한천 등. 페플라스틱 물질 재활용을 위한 인공지능결합 고속 자동화 선별공정 개발. SCIENCEON. [online]. October 2019 (SONG, Han Cheol et al. Development of artificial intelligence combined high-speed automation sorting process for waste plastic recycling). [Retrieved on 22 March 2023]. Retrieved from <URL: https://scienceon.kisti.re.kr/srch/selectPORSrchReport.do?cn=TRKO201900018464>. See pages 8-16. | 1-9 |
| A | JP 2020-062633 A (MIIKE IRON WORKS CO., LTD. et al.) 23 April 2020 (2020-04-23) See claim 1 and figure 1. | 1-9 |
| A | KR 10-2018-0051239 A (INDUSTRY-UNIVERSITY COOPERATION OF USW et al.) 16 May 2018 (2018-05-16) See claim 1 and figure 1. | 1-9 |
| A | KR 10-2019-0050145 A (CTILAB CO., LTD.) 10 May 2019 (2019-05-10) See claim 1 and figure 1. | 1-9 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 March 2023** | **27 March 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/009935**

### C.   DOCUMENTS CONSIDERED TO BE RELEVANT

| Category* | Citation of document, with indication, where appropriate, of the relevant passages | Relevant to claim No. |
|---|---|---|
| A | JP 2021-137738 A (MIIKE IRON WORKS CO., LTD.) 16 September 2021 (2021-09-16)<br>See claim 1 and figure 1. | 1-9 |

Form PCT/ISA/210 (second sheet) (July 2022)

**INTERNATIONAL SEARCH REPORT**
Information on patent family members

| | International application No. |
|---|---|
| | **PCT/KR2022/009935** |

| Patent document cited in search report | | | Publication date (day/month/year) | Patent family member(s) | | | Publication date (day/month/year) |
|---|---|---|---|---|---|---|---|
| JP | 2020-062633 | A | 23 April 2020 | JP | 6679188 | B1 | 15 April 2020 |
| KR | 10-2018-0051239 | A | 16 May 2018 | None | | | |
| KR | 10-2019-0050145 | A | 10 May 2019 | None | | | |
| JP | 2021-137738 | A | 16 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101270354